Europäisches Patentamt

European Patent Office

Office européen des brevets

(19)

(11) Numéro de publication: **0 037 328**
**A1**

(12) # DEMANDE DE BREVET EUROPEEN

(21) Numéro de dépôt: 81400475.0

(22) Date de dépôt: 25.03.81

(51) Int. Cl.³: **H 05 K 7/18**

(30) Priorité: 28.03.80 FR 8006935

(43) Date de publication de la demande:
07.10.81 Bulletin 81/40

(84) Etats contractants désignés:
AT BE CH DE GB IT LI NL SE

(71) Demandeur: Tabourin, Philippe
44 Rue des Ponts Neufs
F-72000 Le Mans(FR)

(72) Inventeur: Tabourin, Philippe
44 Rue des Ponts Neufs
F-72000 Le Mans(FR)

(74) Mandataire: Bressand, Georges
c/o CABINET LAVOIX 2 Place d'Estienne d'Orves
F-75441 Paris Cedex 09(FR)

(54) Appareil destiné à supporter un poste récepteur à écran de visualisation, permettant d'obtenir des images dépourvues de reflets.

(57) L'appareil représenté comporte un boîtier-support (3) sur lequel est articulé (en 4), autour d'un axe horizontal, un caisson (2) formant couvercle, dont le dessus constitue un plateau (1) supportant un appareil à écran de visualisation (A) avec écran de lecture (B). Le caisson (1) est bloqué dans la position angulaire qui lui a été donnée par manoeuvre de la poignée (7) au moyen d'un dispositif de retenue qui peut être dégagé par une pression exercée sur le bouton-poussoir (6). Le boîtier (3) peut tourner autour d'un axe vertical et être déplacé en translation dans une direction perpendiculaire à l'axe (4).

FIG.1

EP 0 037 328 A1

Croydon Printing Company Ltd

1

Appareil destiné à supporter un poste récepteur à écran de visualisation, permettant d'obtenir des images dépourvues de reflets.-

Il est bien connu que sur l'écran de visualisation prévu dans des postes récepteurs, tels que des terminaux d'ordinateur, des reflets apparaissent bien souvent, qui rendent difficile, fatigante et parfois impossible la lecture des informations visualisées, et ce, quel que soit le soin qui a été apporté à l'aménagement des locaux où ces postes sont installés.

Le but de l'invention est de proposer un appareil constituant un socle destiné à supporter un poste récepteur pourvu d'un écran de visualisation, qui permette de recevoir sur l'écran des images dépourvues de reflets.

L'appareil suivant l'invention est caractérisé en ce qu'il comporte un plateau supérieur, sur lequel peut être posé le poste récepteur, qui est monté pivotant autour d'un axe d'articulation horizontal sur un boîtier-support, ainsi que des moyens de retenue pour immobiliser le plateau dans la position de réglage angulaire voulue autour de l'axe d'articulation.

Lorsqu'un poste récepteur à écran de visualisation est posé sur le plateau supérieur de l'appareil, des reflets éventuellement formés sur l'écran peuvent être facilement éliminés par un changement d'inclinaison du plateau supérieur propre à modifier de façon appropriée l'angle d'incidence des rayons lumineux tombant sur l'écran, que ces rayons proviennent de la lumière du jour ou d'une source d'éclairage artificielle. Ce changement de position angulaire peut être obtenu par une action manuelle sur une poignée solidaire du plateau ou sur un organe de commande d'un moteur imprimant un mouvement de basculement au plateau. Le couple à appliquer pour donner au plateau la position la plus favorable est tout à fait minime si, comme il est préférable, l'axe d'articulation horizontal est situé à peu près au milieu de la dimension longitudinale du boîtier-support et transversalement par rapport à elle, ce qui permet de faire en sorte que le centre de gravité de l'ensemble formé par le plateau et le poste récepteur qu'il supporte soit situé à l'aplomb de l'axe d'articulation horizontal.

Il est avantageux que le boîtier-support soit orientable autour d'un axe vertical fixe de l'appareil. Ceci permet notamment à plusieurs personnes occupant des postes de travail différents, par exemple autour d'un terminal d'ordinateur à écran de visualisation, de pouvoir chacune à tour de rôle observer l'écran en lui donnant, sans effort, l'orientation exactement adaptée à son poste de travail.

A ce résultat contribue également une autre caractéristique de l'invention, suivant laquelle, le boîtier-support étant porté par une platine montée rotative, de préférence par l'intermédiaire d'une butée à aiguilles, entre la platine et le fond du boîtier sont disposées deux glissières espacées, perpendiculaires à l'axe d'articulation horizontal, permettant de déplacer en translation l'ensemble boîtier-plateau. Dans ce cas, à l'avant du boîtier sont prévus deux pieds d'appui, par exemple à bille, permettant de maintenir l'horizontalité du boîtier, lorsque ce dernier n'est pas centré par rapport à l'axe vertical.

Lorsque, suivant une disposition qui paraît préférable, l'inclinaison du plateau est commandée manuellement, les moyens pour retenir dans la position angulaire choisie le plateau supérieur comprennent avantageusement une tige coulissante portée par le plateau et guidée perpendiculairement à l'axe d'articulation sur le boîtier et deux surfaces de serrage conjuguées, d'allure cylindrique, concentriques à l'axe d'articulation, solidaires respectivement de la tige coulissante et du boîtier, et normalement appliquées l'une au contact de l'autre, en position active, par un ressort,à l'encontre duquel les deux surfaces peuvent être séparées et mises en position inactive, sous l'action d'une pression exercée sur un bouton-poussoir prévu à une extrémité de la tige coulissante qui fait saillie vers l'extérieur.

D'autres caractéristiques et avantages de l'invention apparaîtront au cours de la description qui va suivre, en référence aux dessins annexés, dans lesquels :

- la fig. 1 est une vue en perspective de l'appareil suivant l'invention, dont le plateau supérieur, incliné vers le haut, supporte un poste récepteur à écran de visualisation;

- la fig. 2 est une vue analogue dans une position où le plateau est incliné vers le bas et supporte en outre, sur un étrier coulissant déployé, un clavier de commande de visualisation;

- la fig. 3 représente le plateau en position horizontale, le boîtier-support étant déployé à la suite d'un mouvement de translation le long de glissières télescopiques;

- la fig. 4 est une vue en coupe longitudinale de l'appareil des figures 1 à 3, qui comporte une commande manuelle;

- la fig. 5 est une vue en coupe suivant la ligne 5-5 de la figure 4;

- la fig. 6 est une vue en coupe longitudinale d'un mode d'exécution de l'appareil, comportant une commande par moteur électrique.

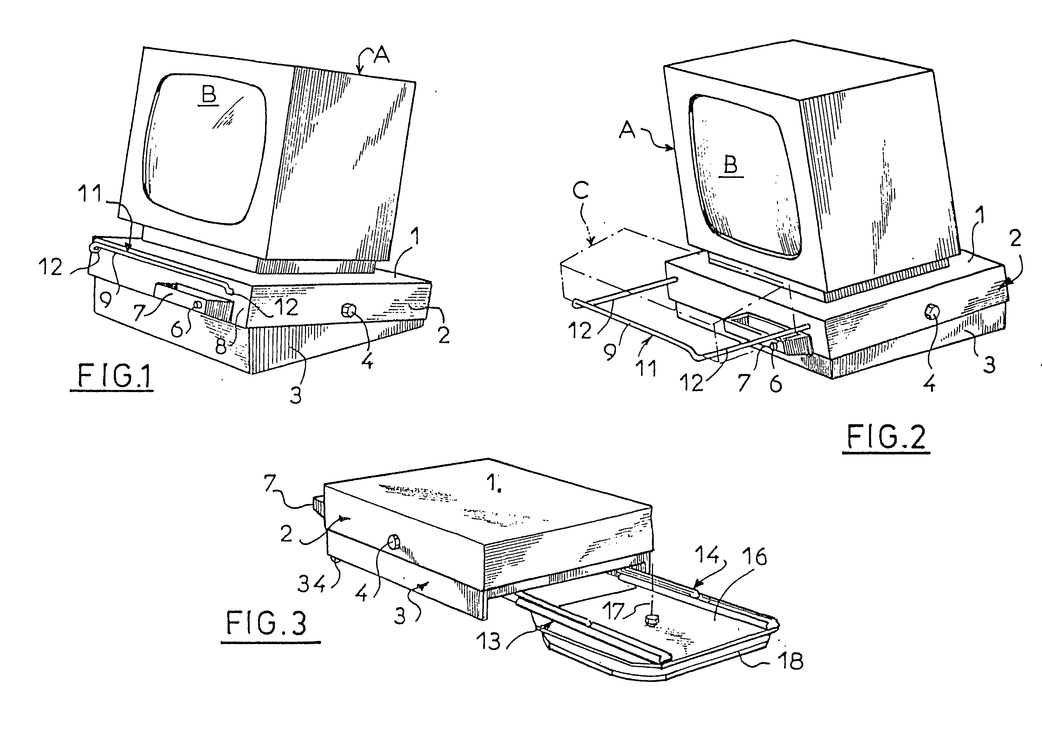

Dans la vue schématique en perspective de la figure 1 un poste récepteur A, à écran de visualisation B, repose à plat sur le dessus 1 en forme de plateau d'un caisson rectangulaire 2 incliné vers le haut, qui forme un couvercle à l'égard d'un boîtier-support horizontal 3, également en forme de caisson rectangulaire, sur lequel

4

le couvercle 2 est articulé en 4 autour d'un axe horizontal et transversal et immobilisé dans la position
inclinée représentée au moyen d'un dispositif de retenue
qui peut être dégagé par une pression manuelle exercée
sur un bouton-poussoir 6 faisant saillie par rapport à
une poignée de manoeuvre 7 fixée sur la face avant 8 du
caisson 2.

Sur cette face 8 fait également saillie la traverse
9 d'un étrier 11 dont les branches 12 constituent des
tiges coulissantes guidées sous le plateau 1 dans une
direction perpendiculaire à l'axe d'articulation horizontal 4. Dans sa position déployée représentée à la figure 2, où le caisson 2 est incliné vers le bas, l'étrier
11 forme un support sur lequel repose un clavier C de commande de visualisation sur l'écran B.

Le plateau a une position horizontale à la figure 3
qui montre que le boîtier-support 3 peut être déplacé en
translation dans une direction horizontale perpendiculaire à l'axe d'articulation 4 grâce à deux glissières
parallèles 13, 14 reliées à une platine horizontale circulaire 16, orientable autour d'un axe vertical fixe 17
et portée par une plaque d'assise rectangulaire 18.

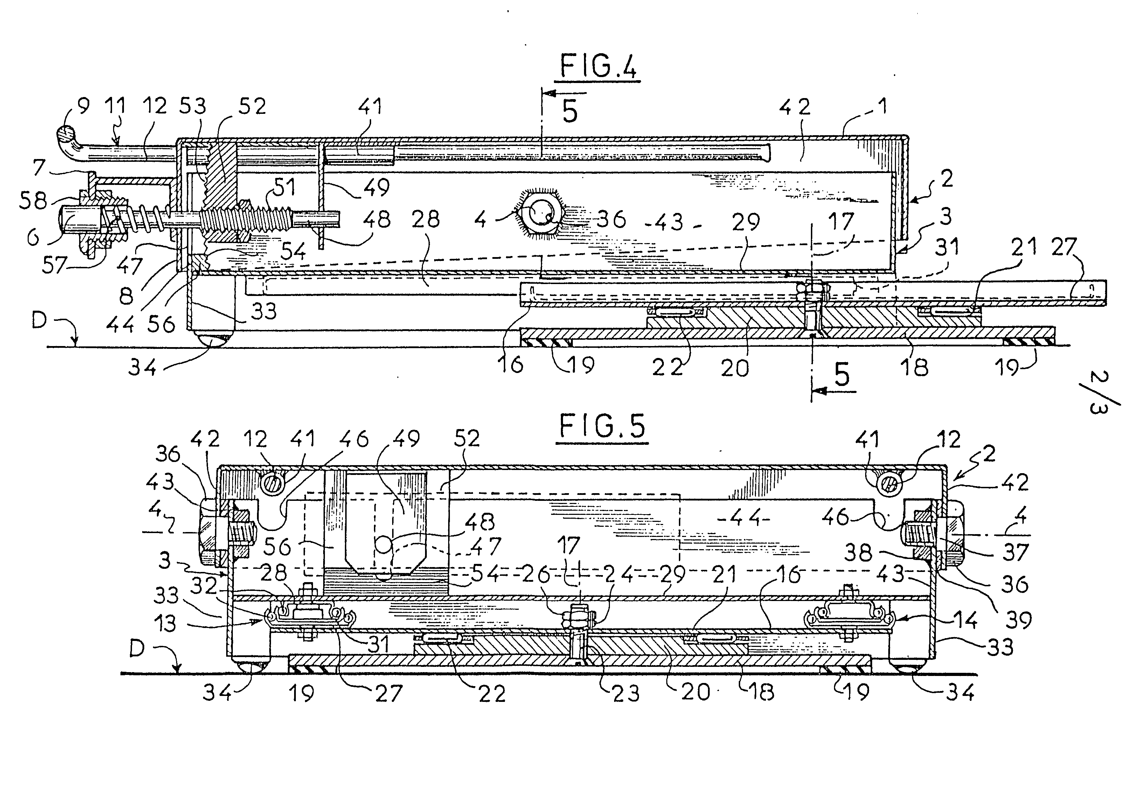

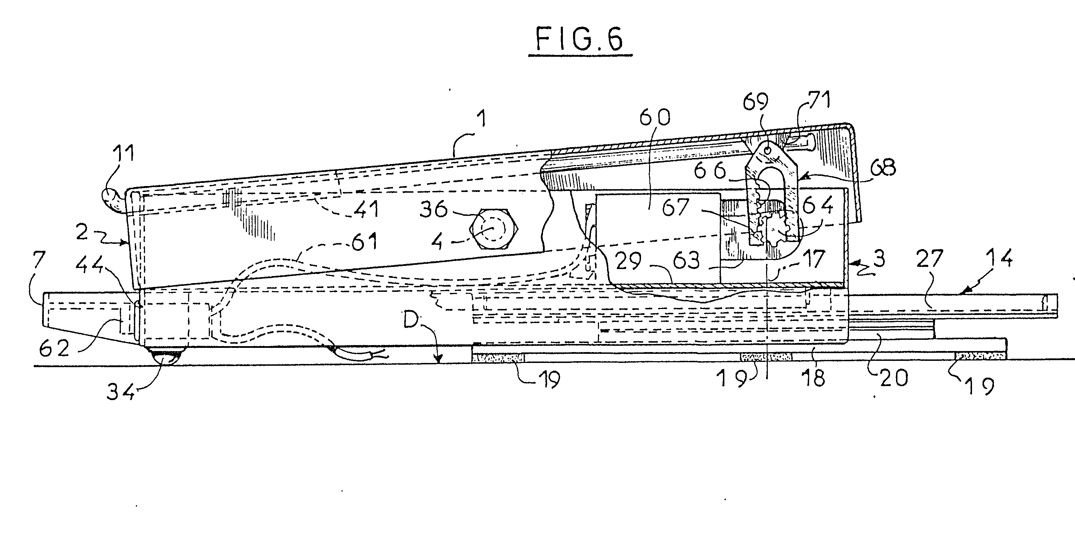

Aux figures 4 et 5 cette plaque 18, qui repose
sur une table horizontale D par l'intermédiaire de patins 19, supporte sur sa face supérieure une plaque 20
dont le dessus comporte une feuillure périphérique 21
définissant l'un des chemins de roulement plans des aiguilles 22 d'un roulement axial dont l'autre chemin de
roulement est constitué par le dessous de la platine 16.
L'ensemble formé par les plaques 18, 20 et la platine 16
est maintenu au moyen d'un boulon 23, qui matérialise
l'axe vertical de rotation 17, d'un écrou 24 et d'un
contre-écrou 26.

Chaque glissière télescopique 13 ou 14 comprend

5

un profilé bas 27 fixé sur le dessus de la platine 16, un profilé haut 28 fixé sur le dessous du fond 29 du boîtier 3, et un profilé intermédiaire 31 ainsi que des billes 32 interposées entre les profilés adjacents pour permettre un glissement sans frottement.

Pour éviter tout porte-à-faux du boîtier 3, ce dernier comporte au voisinage de sa face avant 8 deux pieds d'appui 33 qui prennent contact chacun avec la table D par l'intermédiaire d'une bille 34.

L'axe d'articulation 4 reliant le caisson-couvercle 2 au boîtier-support 3 et situé à peu près à mi-longueur de ce dernier, est matérialisé par deux pivots 36 constitués chacun par un boulon traversant des trous en coïncidence des parois latérales adjacentes 42, 43 des caissons respectifs 2, 3 et vissé dans un écrou 38 soudé sur la face interne de la paroi 43, ce boulon comportant une partie lisse 37 formant portée cylindrique qui est engagée dans la paroi 42 et dans une rondelle 39 interposée entre les deux parois.

Pour qu'au cours du basculement du caisson 1 les manchons 41 qui guident longitudinalement les branches 12 de l'étrier 11 ne viennent pas buter sur le bord supérieur de la paroi verticale avant 44 du boîtier 3, cette paroi comporte des encoches correspondantes 46.

Dans cette même paroi 44 est formée une encoche plus profonde 47, que traverse une tige coulissante de retenue 48 guidée dans des ouvertures correspondantes formées dans la face avant 8 et dans un voile 49, parallèle à cette face, du caisson 2. Sur une partie filetée 51 de cette tige est vissé un bloc 52 comportant une surface de serrage convexe, d'allure cylindrique, munie d'un crantage 53 orienté horizontalement qui, dans la position active représentée, est en prise avec un crantage conjugué 54 d'une autre surface de serrage concave,

6

d'allure cylindrique, formée dans une pièce 56 solidaire du boîtier 3, sous l'effet d'un ressort 57 comprimé entre la partie de la poignée 7 qui est fixée sur la face 8 et le bouton-poussoir 6 constituant l'extrémité extérieure de la tige 48 et guidé dans un manchon 58 solidaire de la poignée 7. Les deux surfaces d'allure cylindrique portant les crantages 53, 54 sont concentriques à l'axe d'articulation 4 défini par les deux pivots 36, ce qui rend possible le basculement autour de cet axe du caisson 2 lorsque les deux surfaces crantées sont écartées l'une de l'autre sous l'effet d'une pression manuelle exercée sur le bouton-poussoir 6 à l'encontre de l'action du ressort 57. Le relâchement du bouton-poussoir bloque le plateau 1 dans la position angulaire voulue sous l'effet de l'interpénétration des crantages 53, 54.

A la figure 6 le mouvement de basculement du caisson 2 est obtenu au moyen d'un moteur électrique réversible 60 fixé sur le fond 29 du boîtier 3 et commandé par l'intermédiaire d'un câble 61 au moyen d'un commutateur 62 adjacent à la poignée 7 qui, n'étant utilisée que pour déplacer en translation le boîtier 3 sur ses glissières 13, 14, est fixée sur la face avant 44 de ce boîtier. Par l'intermédiaire d'un réducteur 63 le moteur 60 entraîne un pignon de sortie 64 avec lequel est en prise une crémaillère 66 formée sur l'une des branches 67 d'une chape 68 suspendue de façon pendulaire, au moyen d'un axe 69, sur une patte 71 fixée sur le dessous du plateau 1.

Le caisson 2, qui porte normalement un poste récepteur tel que A (fig. 1 et 2), reste immobilisé dans la position angulaire atteinte au moment où le moteur 60 a été arrêté grâce à l'effet de retenue créé par la liaison mécanique entre le rotor du moteur et le plateau 1.

7

- REVENDICATIONS -

1 - Appareil constituant un socle destiné à supporter un poste récepteur pourvu d'un écran de visualisation , par exemple un terminal d'ordinateur, et agencé pour permettre de recevoir sur l'écran des images dépourvues de reflets, caractérisé en ce qu'il comporte un plateau supérieur (1), sur lequel peut être posé le poste récepteur, qui est monté pivotant autour d'un axe d'articulation horizontal (4) sur un boîtier-support (3), ainsi que des moyens de retenue (52, 53) pour immobiliser le plateau (1) dans la position de réglage angulaire voulue autour de l'axe d'articulation.

2 - Appareil suivant la revendication 1, caractérisé en ce que le plateau supérieur (1) constitue le dessus d'un caisson formant couvercle (2) qui recouvre le boîtier-support (3).

3 - Appareil suivant l'une des revendications 1 et 2, caractérisé en ce que l'axe d'articulation horizontal (4) est situé à peu près au milieu de la dimension longitudinale du boîtier-support (3) et transversalement par rapport à elle.

4 - Appareil suivant l'une des revendications 1 à 3, caractérisé en ce que, sous le plateau supérieur (1), sont guidées, suivant une direction perpendiculaire à l'axe d'articulation (4), deux tiges coulissantes (12) qui, en position déployée, peuvent constituer un support (11) pour un clavier éventuellement associé au poste récepteur.

5 - Appareil suivant l'une des revendications 1 à 4, caractérisé en ce que le boîtier-support (3) est orientable autour d'un axe vertical fixe (17).

6 - Appareil suivant la revendication 5, caractérisé en ce que le boîtier (3) est porté par une platine (16) montée rotative autour de l'axe vertical (17).

7 - Appareil suivant la revendication 6, caractérisé en ce que, entre la platine (16) et le fond (29) du boîtier (3) sont disposées deux glissières espacées (13, 14), perpendiculaires à l'axe d'articulation horizontal (4), permettant de déplacer en translation l'ensemble boîtier-plateau.

8 - Appareil suivant la revendication 7, caractérisé en ce que, à l'avant du boîtier (3), sont prévus deux pieds d'appui (33), par exemple à bille (34), permettant de maintenir l'horizontalité du boîtier (3), lorsque ce dernier n'est pas centré par rapport à l'axe vertical (1).

9 - Appareil suivant la revendication 1, caractérisé en ce que, l'inclinaison du plateau supérieur (1) étant commandée manuellement, les moyens de retenue comprennent une tige coulissante (48) portée par le plateau (1) et guidée perpendiculairement à l'axe d'articulation (4) sur le boîtier (3) et deux surfaces de serrage conjuguées (53, 54), d'allure cylindrique, concentriques à l'axe d'articulation, solidaires respectivement de la tige coulissante (48) et du boîtier (3), et normalement appliquées l'une au contact de l'autre, en position active, par un ressort (57), à l'encontre duquel les deux surfaces peuvent être séparées et mises en position inactive, sous l'action d'une pression exercée sur un bouton-poussoir (6) prévu à une extrémité de la tige coulissante qui fait saillie vers l'extérieur.

10 - Appareil suivant la revendication 9, caractérisé en ce que les deux surfaces de serrage sont des surfaces crantées.

11 - Appareil suivant la revendication 1, caractérisé en ce que l'inclinaison du plateau supérieur (1) étant commandée par un moteur électrique réversible (60) porté par le boîtier, ce moteur est relié à un réducteur

9

(63) dont l'arbre de sortie comporte un pignon (64) en prise avec une surface dentée conjuguée (66) formée sur une pièce d'entraînement (68) solidaire du plateau, cet ensemble assurant le maintien du plateau dans la position angulaire définie par la position dans laquelle le moteur a été mis à l'arrêt.

FIG.1

FIG.2

FIG.3

0037328

## FIG.4

## FIG.5

0037328

FIG.6

0037328

0037328

Office européen
des brevets

**RAPPORT DE RECHERCHE EUROPEENNE**

EP 81 40 0475

| | DOCUMENTS CONSIDERES COMME PERTINENTS | | | CLASSEMENT DE LA DEMANDE (Int. Cl.³) |
|---|---|---|---|---|
| Catégorie | Citation du document avec indication, en cas de besoin, des parties pertinentes | Revendica-tion concernée | | |
| A | DE - A - 2 836 655 (KARL GUTMANN)<br>* Revendications; figures 1-5 * | 1 | | H 05 K 7/18 |
| A | DE - A - 2 452 523 (ROBERT KRAUSE)<br>* Revendications; figures 1-5 * | 7 | | |

DOMAINES TECHNIQUES RECHERCHES (Int. Cl.³)

H 05 K   7/18
A 47 B 37/02
B 41 J 29/06
H 04 N   5/64

CATEGORIE DES DOCUMENTS CITES

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons
&: membre de la même famille,
   document correspondant

Le présent rapport de recherche a été établi pour toutes les revendications

| Lieu de la recherche | Date d'achèvement de la recherche | Examinateur |
|---|---|---|
| La Haye | 01-07-1981 | VAN REETH |

OEB Form 1503.1   06.78